(19) Europäisches Patentamt
European Patent Office
Office européen des brevets

(11) **EP 3 972 020 A1**

(12) **EUROPÄISCHE PATENTANMELDUNG**

(43) Veröffentlichungstag:
**23.03.2022   Patentblatt 2022/12**

(51) Internationale Patentklassifikation (IPC):
**H01M 8/1006** (2016.01)    **H01M 8/12** (2016.01)
**H01M 8/122** (2016.01)    **H01M 8/124** (2016.01)
**H01M 8/1246** (2016.01)

(21) Anmeldenummer: **21182360.4**

(22) Anmeldetag: **29.06.2021**

(52) Gemeinsame Patentklassifikation (CPC):
**H01M 8/1006; H01M 8/12; H01M 8/122;
H01M 8/124; H01M 8/1246**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **16.09.2020   DE 102020124145**

(71) Anmelder: **Airbus Defence and Space GmbH
82024 Taufkirchen (DE)**

(72) Erfinder:
• **METZNER, Christian
82024 Taufkirchen (DE)**
• **ZIMMERMANN, Kristian
82024 Taufkirchen (DE)**
• **FRIEDL, Stephan
82024 Taufkirchen (DE)**

(54) **BRENNSTOFFZELLE UND BRENNSTOFFZELLENSYSTEM FÜR EIN LUFTFAHRZEUG**

(57)    Um die Nutzbarkeit von hybridelektrischen oder vollelektrischen Luftfahrzeugen zu verbessern, wird eine Brennstoffzelle (10) mit verbesserter Effizienz und gesteigerter volumen- bzw. gewichtsspezifischer Energiedichte angegeben. Die Brennstoffzelle (10) weist eine selbsttragende Membranstruktur (12) auf die als dreifach periodische glatte Oberfläche ausgebildet ist, die einen mit Brennstoff (40) beaufschlagten ersten Hohlraum (14) von einem mit Oxidationsmittel (42) beaufschlagten zweiten Hohlraum (16) gasdicht abtrennt, die beiden Hohlräume (14, 16) jedoch miteinander ionenleitend verbindet.

FIG 1

EP 3 972 020 A1

**Beschreibung**

Die Erfindung betrifft eine Brennstoffzelle. Ferner betrifft die Erfindung ein Brennstoffzellensystem für ein Luftfahrzeug und ein Luftfahrzeug.

Energiespeichersysteme mit hoher Energiedichte werden als Wegbereiter für elektrische Luftfahrzeuge gesehen. Nicht nur im Individualverkehr sondern auch in der Luftfahrt werden alternative Antriebskonzepte und Energiequellen zusehends wichtiger. Ein Konzept sind elektrische Antriebe bzw. allgemein die Erzeugung elektrischer Energie in einem Luftfahrzeug. Hybridelektrische und vollelektrische Luftfahrzeuge, wie auch andere Systeme und Geräte (Kraftfahrzeuge, Industrie und Freizeit) erfordern zuweilen Energiespeicher mit geringem Gewicht oder Volumen. Aus Sicht der Luftfahrt kommt es auf eine hohe Leistungsdichte, einfache Wartbarkeit und hohe Skalierbarkeit an. Ein Kandidat zur Bereitstellung der erforderlichen Energien sind Brennstoffzellen, insbesondere Festoxidbrennstoffzellen.

Derzeit werden insbesondere Batterien und wasserstoffbasierte Systeme verwendet. Festoxidbrennstoffzellen (engl.: solid oxide fuel cell, SOFC) sind ein Bautyp von Hochtemperaturbrennstoffzellen, die einen Brennstoff (beispielsweise Wasserstoff) und einen Oxidationsmittel (beispielsweise Luft) in Elektrizität, Wärme und andere Nebenprodukte wie etwa Wasser umwandeln.

SOFC haben generell einen Elektrolyten, eine Anode und Kathode sowie Verbinder, sogenannte Interkonnektoren. Die Interkonnektoren ermöglichen die bessere Ableitung des generierten elektrischen Stroms, da bei der üblichen Betriebstemperatur die Leitfähigkeit von Anode und Kathode zu gering sein kann, um den Strom effizient abzuleiten. Heutige Architekturen beruhen auf flachen oder rohrförmigen Zellen aufgrund der einfacheren Herstellbarkeit und des vergleichsweise günstigen Verhältnisses von aktiver Fläche zu Volumen (auch genannt: A/V).

Es ist die Aufgabe der Erfindung, Brennstoffzellen für den Einsatz in der Luftfahrt zu verbessern.

Die Aufgabe wird durch den Gegenstand der unabhängigen Ansprüche gelöst. Bevorzugt Weiterbildungen sind Gegenstand der abhängigen Ansprüche.

Die Erfindung schafft eine Brennstoffzelle, vorzugsweise Festoxidbrennstoffzelle, für ein Brennstoffzellensystem, vorzugsweise eines Luftfahrzeugs, wobei die Brennstoffzelle eine selbsttragende Membranstruktur umfasst, wobei die Membranstruktur einen ersten offenporigen Hohlraum und einen zweiten offenporigen Hohlraum miteinander ionenleitend verbindet und voneinander gasdicht trennt, wobei der erste Hohlraum und der zweite Hohlraum sich gegenseitig durchdringen.

Es ist bevorzugt, dass jeder Hohlraum ausgebildet ist, wenigstens einen länglichen geraden Interkonnektorenkörper aufzunehmen.

Es ist bevorzugt, dass jeder Hohlraum wenigstens einen Gaskanal enthält, der derart länglich und gerade ausgebildet ist, dass der Interkonnektorenkörper darin aufnehmbar ist.

Es ist bevorzugt, dass ein Membranstrukturbereich jeweils zwei benachbarte Gaskanäle miteinander ionenleitend verbindet und voneinander gasdicht trennt.

Es ist bevorzugt, dass ein in dem ersten Hohlraum enthaltener gerader erster Gaskanal und ein in dem zweiten Hohlraum enthaltener gerader zweiter Gaskanal zueinander windschief angeordnet sind.

Es ist bevorzugt, dass die Membranstruktur einen Festelektrolyten enthält.

Es ist bevorzugt, dass auf der Membranstruktur eine elektrisch leitende Anodenschicht und eine elektrisch leitende Kathodenschicht aufgebracht sind, wobei die Anodenschicht in dem einen der Hohlräume und die Kathodenschicht in dem anderen der Hohlräume angeordnet ist.

Vorzugsweise umfasst die Brennstoffzelle eine Mehrzahl von länglichen Interkonnektorenelementen, die ausgebildet sind, in jeden der Hohlräume eingefügt zu werden und die Membranstruktur und/oder die Anoden-/Kathodenschicht zu kontaktieren.

Es ist bevorzugt, dass das Interkonnektorenelement einen Interkonnektorenkörper mit zylindrischem Außenumfang aufweist. Es ist bevorzugt, dass der Interkonnektorenkörper als massiver Rundstab oder rohrförmig ausgebildet ist.

Es ist bevorzugt, dass wenigstens eines der Interkonnektorenelemente ausgebildet ist, mit der Membranstruktur und/oder der Anoden-/Kathodenschicht einen Linienkontakt, vorzugsweise einen helikalen Linienkontakt, zu bilden, wenn das Interkonnektorenelement in einem der Hohlräume eingefügt ist.

Es ist bevorzugt, dass das Interkonnektorenelement ausgebildet ist, mit der Membranstruktur und/oder der Anoden-/Kathodenschicht einen Gasdurchlassbereich zu definieren, der einen Gasstrom entlang der Längsrichtung und/oder in Umfangsrichtung und/oder einen helikalen Gasstrom entlang des Interkonnektorenelements erlaubt, wenn das Interkonnektorenelement in einem der Hohlräume eingefügt ist.

Vorzugsweise umfasst die Brennstoffzelle wenigstens einen Gasverteiler, der an einer Einlassseite und/oder einer Auslassseite der Membranstruktur angeordnet ist, wobei der Gasverteiler, der vorzugsweise an der Einlassseite angeordnet ist, derart ausgebildet ist, dass einer der Hohlräume mit gasförmigem Brennstoff und der andere der Hohlräume mit gasförmigem Oxidationsmittel beaufschlagbar ist und/oder wobei der Gasverteiler, der vorzugsweise an der Auslassseite angeordnet ist, derart ausgebildet ist, dass die Reaktionsprodukte und/oder Restgas aus dem jeweiligen Hohlraum auslassbar ist.

Es ist bevorzugt, dass die Membranstruktur in Form einer dreifach periodisch glatten Oberfläche ausgebildet ist.

Es ist bevorzugt, dass die Oberflächenform der Membranstruktur ausgewählt ist aus einer Gruppe von Oberflächenformen, bestehend aus einer Gyroidform, einer gyroidartigen Form, einer Diamantform, einer diamantartigen Form, einer iWP-Form, einer iWP-artigen Form, einer Schwarz-P-Form und einer schwarz-P-artigen Form.

Die schwarz-P-artige Oberflächenform gehorcht der Gleichung:

$$\cos kx \cos ly \cos mz = 0.$$

Die diamant-artige Oberflächenform gehorcht der Gleichung:

$$
\begin{aligned}
\sin kx \sin ly \sin mz \quad &+ \\
\sin kx \cos ly \cos mz \quad &+ \\
\cos kx \sin ly \cos mz \quad &+ \\
\cos kx \cos ly \sin mz \quad &= \quad 0.
\end{aligned}
$$

Die gyroidartige Oberflächenform gehorcht der Gleichung:

$$
\begin{aligned}
\cos kx \sin ly \quad &+ \\
\cos ly \sin mz \quad &+ \\
\sin kx \cos mz \quad &= \quad 0.
\end{aligned}
$$

Die iWP-artige Oberflächenform gehorcht der Gleichung:

$$
\begin{aligned}
\cos kx \cos ly \quad &+ \\
\cos ly \cos mz \quad &+ \\
\cos kx \cos mz \quad &- \\
\cos kx \cos ly \cos mz \quad &= \quad 0.
\end{aligned}
$$

Dabei gilt: $k = \frac{2\pi n}{L}, \quad l = \frac{2\pi p}{L},$ $m = \frac{2\pi q}{L}$ mit $L$ der Länge der Einheitszelle und $n, p, q \in \mathbb{N}.$ Vorzugsweise gilt $k = l = m = \frac{2\pi n}{L}$ mit $L$ der Länge der Einheitszelle und $n \in \mathbb{N}.$

In diesem Fall werden die Oberflächenformen als Gyroidform, Diamantform, iWP-Form und Schwarz-P-Form bezeichnet.

Zur Erfindung gehören auch Oberflächenformen, die um weniger als 10 % von den vorgenannten Oberflächenformen abweichen. Als Abweichungsmaß dient vorzugsweise die mittlere quadratische Abweichung oder Standardabweichung von der durch die Gleichungen definierten Idealform:

Die Erfindung schafft ein Brennstoffzellensystem für ein Luftfahrzeug, umfassend eine Mehrzahl von bevorzugten Brennstoffzellen, wobei die Brennstoffzellen miteinander seriell und/oder parallel elektrisch verschaltet sind.

Die Erfindung schafft ein Luftfahrzeug umfassend eine bevorzugte Brennstoffzelle und/oder ein bevorzugtes Brennstoffzellensystem.

Die Erfindung beinhaltet die Verwendung einer dreifach periodischen Minimalfläche als Membranstruktur einer Brennstoffzelle, wobei die Membranstruktur ein mit Brennstoff beaufschlagbares Volumen und ein mit Oxidationsmittel beaufschlagbares Volumen miteinander ionenleitend verbindet und voneinander gasdicht trennt.

Dreidimensional geformte glatte Oberflächen können das A/V Verhältnis verbessern und somit die Energiedichte des Systems steigern. Zudem können moderne Fertigungstechniken, wie additive Fertigung bzw. 3D-Drucken verwendet werden.

Eine Idee ist es, ein Volumen mit zwei Hohlräumen mittels einer Separatormembran minimaler Wanddicke zu erzeugen. Der Separator weist eine dreidimensional gekrümmte und selbsttragende Geometrie (stetig und tangential) auf. Aufgrund der Komplexität des Designs, wird 3D-Drucken als Ausgangsbasis für dessen Herstellung angesehen.

Vorliegend kann der Elektrolyt mittels 3D-Drucken hergestellt werden. Die Anode und Kathode können dann beispielsweise mittels Beschichten des gedruckten Elektrolyten appliziert werden. Ebenfalls denkbar ist eine Herstellungsroutine mittels 3D-Drucken der Anode, Kathode und Supportstruktur sowie nachfolgender Beschichtung der weiteren Lagen. Auch eine indirekte Herstellung über verlorene Werkzeuge bzw. verlorene Formen ist denkbar. Dabei können die Abguss-Modelle oder die Werkzeuge 3D-gedruckt werden.

Vorteilhaft kann die geringe Membrandicke die elektrischen Verluste verringern. Ebenso wird die Verteilung des Druckunterschiedes zwischen den Hohlräumen über die gekrümmte Membranfläche günstiger verteilt. Die Geometrie erlaubt zudem einen einfachen Zugang zu elektrischen Kontakten, ohne den Gasfluss zu blockieren.

Eine weitere Idee ist es, 2-volumetrische dreifach periodische glatte Oberflächen (engl. triply periodic level surfaces, TPLS) als Grundlegende Struktur für den Elektrolyten der SOFC zu verwenden, beispielsweise Yttrium stabilisiertes Zirconiumdioxid (engl. Yttria Stabilized Zirconia, YSZ). Beispiele für TPLS sind unter anderem Gyroid, Diamant, iWP, Primitive, ...

Elektrische Kontakte können mittels Stangen/Stäben oder Drähten erreicht werden, die durch die orthogonal oder diagonal gerade verlaufenden Hohlräume der TPLS eingefügt werden.

Es kann die Effizienz gesteigert werden, weil der Elektrolyt bzw. die Membran mit einer geringen Wanddicke von weniger als 100 μm ausgebildet werden kann. Möglich ist dies beispielsweise durch ein schlickerbasiertes Entbindungs- oder Sinterverfahren im 3D-Druck aufgrund der vergleichsweise hohen Steifigkeit des Grünkörpers (ungesinterter Zustand - Partikel können mittels Polymerbinder verklebt sein) der selbsttragenden Oberflächen.

TPLS haben die inhärente Eigenschaft, den Gasstrom separieren zu können.

TPLS können eine besonders hohe volumenspezifische funktionale Fläche aufweisen, so dass die nach Volumen/Gewicht spezifische Energiedichte erhöht werden kann.

Die Verbindungsstäbe oder -rohre (steif, hohl und/oder porös) können in die geraden Bereiche der Hohlräume eingesetzt werden. In einem Gyroid kann sich ein besonders vorteilhafter helikaler Linienkontakt zwischen Stange und Gyroidoberfläche ausbilden.

Die elektrischen Kontakte können die Volumen durchdringen. Befestigung und Abdichtung der Verbinder relativ zu der Elektrolytgeometrie kann durch Schrumpfung des Grünkörpers während des Sinterns erreicht werden (YSZ mit etwa 10 % bis 20 % Volumenschrumpfung führt zu einer knappen Passung).

Die Lebensdauer der SOFC kann aufgrund isotroper thermischer Spannungen kombiniert mit den strukturellen mechanischen Eigenschaften der TPLS gesteigert werden. Ferner können die Belastungen zwischen Interkonnektoren bzw. Verbindern und Elektrolyt bzw. Membranstruktur verringert werden.

Wie auch bei herkömmlichen Brennstoffzellen, werden Wasserstoff und Sauerstoff in die beiden Hohlräume, die durch die dünne Membranstruktur getrennt sind, eingebracht. Die über die Dicke der Membran erfolgende chemische Reaktion erzeugt einen elektrischen Strom.

Im Unterschied zu herkömmlichen Flachen Membranen, die gewöhnlich eine zusätzliche mechanische Stabilisierung erfordern, sind Membranen mit TPLS Oberfläche selbststabilisierend. Das bedeutet, dass Druckunterschiede bei TPLS nicht mehr zu größeren Deformationen führen, welche die Effizienz der SOFC wesentlich beeinträchtigen. Das gesamte System wird selbsttragend.

TPLS können mittels herkömmlicher Werkzeugmaschinen schwer oder gar nicht hergestellt werden. Es wird daher vorgeschlagen, die hochtemperaturresistenten Keramiken mittels 3D-Druck zu einer Membranstruktur zu formen.

Für eine gyroidbasierte SOFC könnte ein typisches Herstellungsverfahren wie folgt aussehen.

Der funktionale SOFC-Teil wird ausgelegt. Es können die Einheitszellenlänge und Wanddicke minimiert werden, um die volumenspezifische funktionale Fläche zu erhöhen. So sind bei einer Einheitszellenlänge von 2 mm und 100 μm Wanddicke etwa 3200 m² funktionale Fläche per m³ Volumen möglich.

3D-Drucken der TPLS-basierten Membranstruktur bzw. Elektrolyt mittels lithographieschlickerbasiertem Material mit 3 mol-% bis 8 mol-% YSZ und anschließendem Entbinden/Sintern zum Erzeugen des Keramikzustands.

Erzeugen der Anoden- und Kathoden-Schichten mittels eines Beschichtungsverfahrens (beispielsweise schlickerbasiert oder andere Verfahren).

Einfügen von Interkonnektoren in Stab- oder Rohrform in einige oder alle gerade verlaufende Hohlräume bzw. Gaskanäle, je nach SOFC-Leistung und Interkonnektorenwiderstand.

Abdichten der Außenseite des Interkonnektorenelements mittels Glaslot.

Anbringen eines Gasverteilers an Ober- und Unterseite der Brennstoffzelle, um einen vertikalen Gasstrom in dem jeweiligen Hohlraum in Vertikalrichtung zu erzeugen zu können.

Ausführungsbeispiele werden anhand der beigefügten schematischen Zeichnungen näher erläutert. Darin zeigt:

Fig. 1 ein Ausführungsbeispiel einer Brennstoffzelle;

Fig. 2 eine Reihe von diagonalen Schnitten einer Membranstruktur;

Fig. 3 eine Reihe von orthogonalen Schnitten der Membranstruktur aus Fig. 2;

Fig. 4 links: eine Ansicht eines eingefügten Interkonnektorenelements, rechts: eine Detailansicht des Kontaktbereichs des Interkonnektorenelements mit der Membranstruktur;

Fig. 5 ein Ausführungsbeispiel eines Interkonnektorenelements;

Fig. 6 ein Ausführungsbeispiel eines Gasverteilers; und

Fig. 7 Ansichten von Membranstrukturen mit unterschiedlichen dreifach periodisch glatten Oberflächenformen.

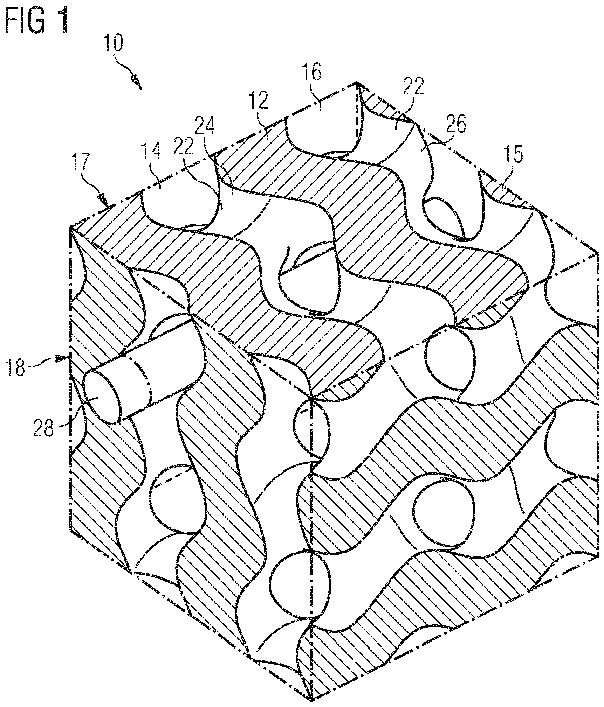

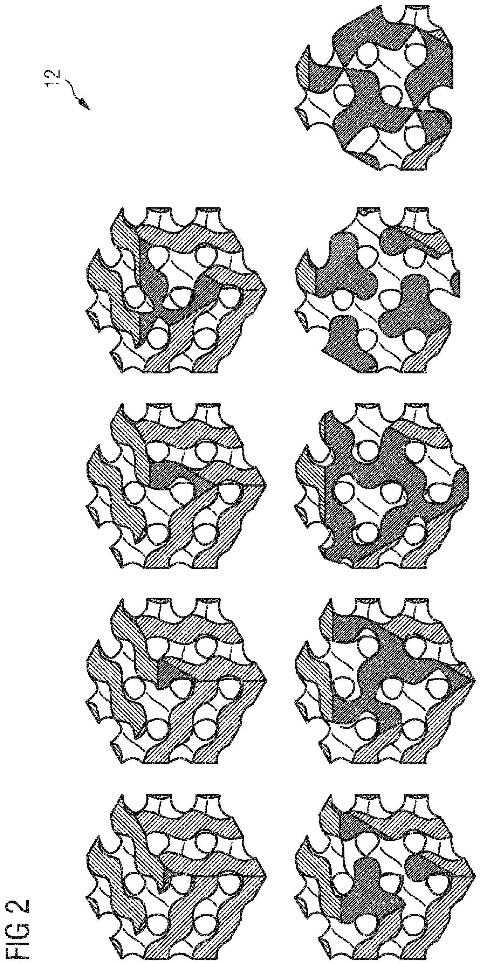

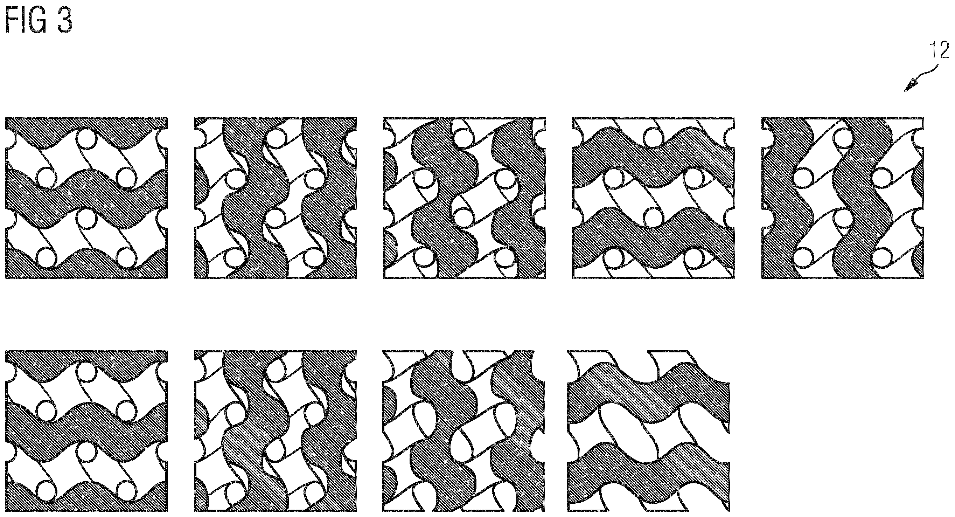

Es wird zunächst auf Fig. 1 bis Fig. 3 Bezug genommen, die ein Ausführungsbeispiel einer Brennstoffzelle 10 zeigt. Die Brennstoffzelle 10 ist als Festoxidbrennstoffzelle ausgebildet. Die Brennstoffzelle 10 ist so ausgebildet, dass sie in einem Brennstoffzellensystem eines Luftfahrzeugs einsetzbar ist.

Die Brennstoffzelle 10 umfasst eine selbsttragende Membranstruktur 12. Die Membranstruktur 12 erzeugt einen ersten offenporigen Hohlraum 14 und einen zweiten offenporigen Hohlraum 16. Die Membranstruktur 12 trennt den ersten Hohlraum 14 und den zweiten Hohlraum 16 gasdicht voneinander. Die Membranstruktur 12 verbindet den ersten Hohlraum 14 und den zweiten Hohlraum 16 ionenleitend miteinander.

Die Membranstruktur 12 umfasst vorzugsweise einen Festelektrolyten 15, der die Ionenleitung ermöglicht.

Die Membranstruktur 12 ist so ausgebildet, dass der erste Hohlraum 14 und der zweite Hohlraum 16 sich gegenseitig durchdringen.

Die Membranstruktur 12 bildet eine dreifach periodische glatte Oberfläche, beispielsweise ein Gyroid 17. Auch andere derartige Oberflächen sind denkbar. Jeder Hohlraum 14, 16 enthält wenigstens einen Gaskanal 18. Der Gaskanal 18 ist als ein länglicher im Wesentlichen gerader Bereich ausgebildet, so dass ein entsprechender länglicher gerader Körper darin eingefügt werden kann.

Benachbarte Gaskanäle 18 sind durch einen Membranstrukturbereich 20 der Membranstruktur 12 gasdicht voneinander getrennt, aber miteinander ionenleitend verbunden.

Die Membranstruktur 12 weist eine elektrisch leitende Kontaktschicht 22 auf. Je nach Anordnung der Kontaktschicht 22 wird die Kontaktschicht 22 in dem einen Hohlraum, beispielsweise dem ersten Hohlraum 14, als Anodenschicht 24 und die Kontaktschicht 22 in dem anderen Hohlraum, beispielsweise dem zweiten Hohlraum 16, als Kathodenschicht 26 bezeichnet.

Die Kontaktschicht 22 dient dazu die in der Brennstoffzelle 10 erzeugte elektrische Energie an einen elektrischen Verbraucher, beispielsweise ein elektrisch angetriebenes Triebwerk des Luftfahrzeugs, zu leiten.

Die Brennstoffzelle 10 umfasst ferner eine Mehrzahl von Interkonnektorenelementen 28, die in einen der Gaskanäle 18 eingefügt sind. Das Interkonnektorenelement 28 ist beispielsweise rundstabförmig oder rohrförmig ausgebildet.

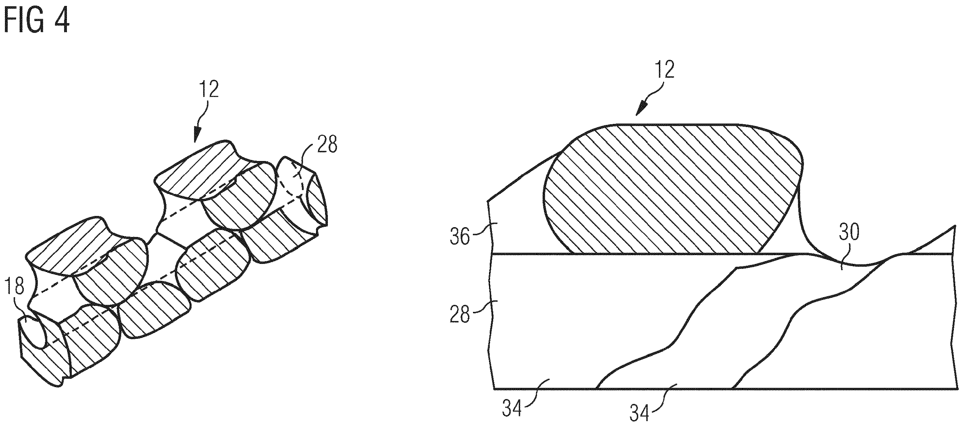

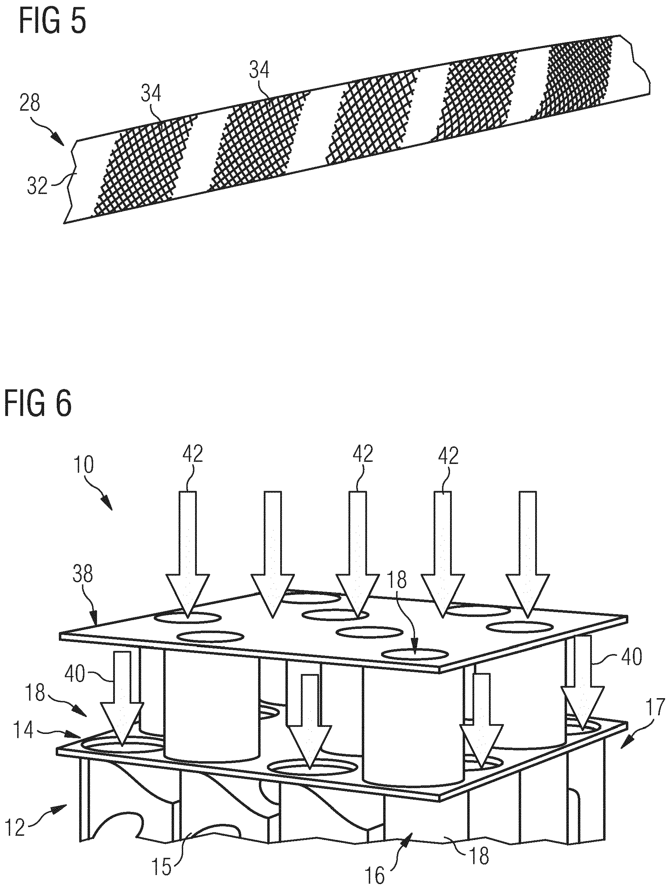

Nachfolgend wird insbesondere auf Fig. 4 und Fig. 5 Bezug genommen. Das Interkonnektorenelement 28 bildet vorzugsweise einen Linienkontakt 30 mit der Membranstruktur 12. Der Linienkontakt 30 ist helikal ausgebildet. Mit anderen Worten windet sich der Linienkontakt 30 spiralförmig entlang der Längsrichtung des Interkonnektorenelements 28 um dieses herum.

Das Interkonnektorenelement 28 kann einen Interkonnektorenkörper 32 aufweisen, der aus einem elektrisch leitenden oder isolierenden Material gebildet sein kann. Das Interkonnektorenelement 28 kann ferner ein leitfähiges Band 34 aufweisen, das spiralförmig um den Interkonnektorenkörper 32 herumgewunden ist (Fig. 5).

Das Interkonnektorenelement 28 definiert mit der Membranstruktur 12 vorzugsweise einen Gasdurchlassbereich 36, der einen Gasstrom entlang der Außenseite des Interkonnektorenelements 28 ermöglicht. Alternativ oder zusätzlich, kann der Gasstrom durch das rohrförmige Interkonnektorenelement 28 hindurch strömen.

Es wird nachfolgend auf Fig. 6 Bezug genommen. Die Brennstoffzelle 10 kann einen Gasverteiler 38 aufweisen. Der Gasverteiler 38 ist beispielsweise auf der Einlassseite 40 der Membranstruktur 12 angeordnet. Weitere Gasverteiler, insbesondere auf der Auslassseite der Membranstruktur 12, können ebenfalls vorgesehen sein.

Der Gasverteiler 38 ist derart ausgebildet, dass der Brennstoff 40, beispielsweise Wasserstoff, in den ersten Hohlraum 14 geleitet werden kann während das Oxidationsmittel 42, beispielsweise Luft, in den zweiten Hohlraum 16 geleitet werden kann.

Der (nicht näher dargestellte) auslassseitige Gasverteiler ermöglicht das Auslassen der Reaktionsprodukte und von Restgas. Der auslassseitige Gasverteiler ist vorzugsweise identisch zu dem einlassseitigen Gasverteiler 38 ausgebildet.

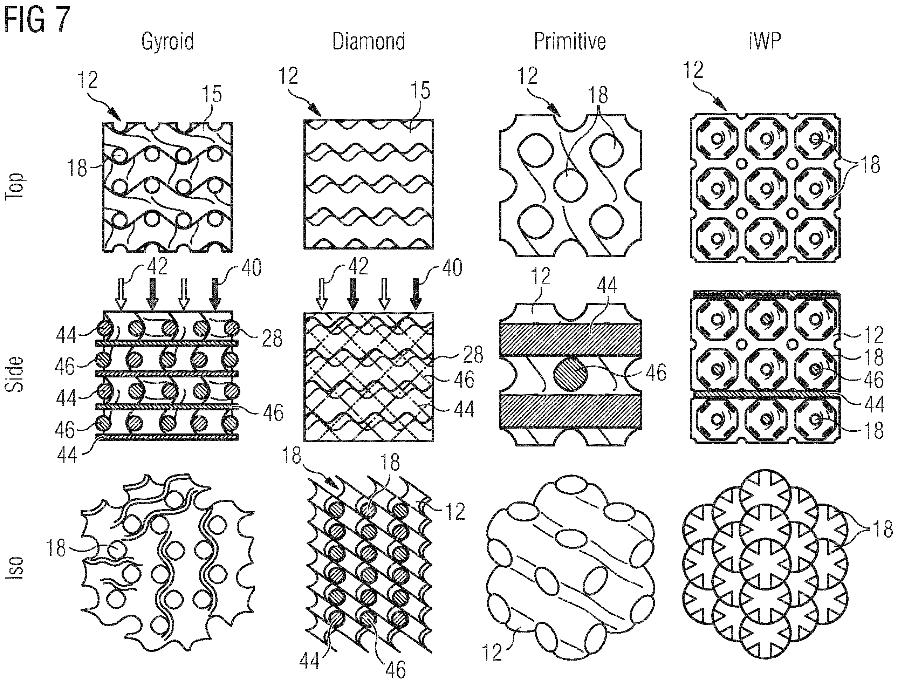

Fig. 7 zeigt neben dem Gyroid 17 weitere dreifach periodische glatte Oberflächenformen, die Diamond, Primitive und iWP genannt werden. Ferner ist in Fig. 7 dargestellt, wie die Interkonnektorenelemente 28 in die Gaskanäle 18 eingefügt werden.

Aufgrund der intrinsischen Eigenschaften der dreifach periodischen glatten Oberflächenformen werden Anoden 44 und Kathoden 46 vorzugsweise im Wechsel angeordnet. Wie weiter aus Fig. 7 ersichtlich müssen nicht alle Gaskanäle 18 mit einem Interkonnektorenelement 28 ausgestattet sein.

Um die Nutzbarkeit von hybridelektrischen oder vollelektrischen Luftfahrzeugen zu verbessern, wird eine Brennstoffzelle (10) mit verbesserter Effizienz und gesteigerter volumen- bzw. gewichtsspezifischer Energiedichte angegeben. Die Brennstoffzelle (10) weist eine selbsttragende Membranstruktur (12) auf die als dreifach periodische glatte Oberfläche ausgebildet ist, die einen mit Brennstoff (40) beaufschlagten ersten Hohlraum (14) von einem mit Oxidationsmittel (42) beaufschlagten zweiten Hohlraum (16) gasdicht abtrennt, die beiden Hohlräume (14, 16) jedoch miteinander ionenleitend verbindet.

**Bezugszeichenliste:**

| | |
|---|---|
| 10 | Brennstoffzelle |
| 12 | selbsttragende Membranstruktur |
| 14 | erster offenporiger Hohlraum |
| 15 | Festelektrolyt |
| 16 | zweiter offenporiger Hohlraum |
| 17 | Gyroid |
| 18 | Gaskanal |
| 20 | Membranstrukturbereich |
| 22 | elektrisch leitende Kontaktschicht |
| 24 | Anodenschicht |
| 26 | Kathodenschicht |
| 28 | Interkonnektorenelement |

30    Linienkontakt
32    Interkonnektorenkörper
34    leitfähiges Band
36    Gasdurchlass
38    Gasverteiler
40    Brennstoff
42    Oxidationsmittel
44    Anode
46    Kathode

**Patentansprüche**

1.  Brennstoffzelle (10), vorzugsweise Festoxidbrennstoffzelle, für ein Brennstoffzellensystem, vorzugsweise eines Luftfahrzeugs, wobei die Brennstoffzelle (10) eine selbsttragende Membranstruktur (12) umfasst, wobei die Membranstruktur (12) einen ersten offenporigen Hohlraum (14) und einen zweiten offenporigen Hohlraum (16) miteinander ionenleitend verbindet und voneinander gasdicht trennt, wobei der erste Hohlraum (14) und der zweite Hohlraum (16) sich gegenseitig durchdringen.

2.  Brennstoffzelle (10) nach Anspruch 1, wobei jeder Hohlraum (14, 16) ausgebildet ist, wenigstens einen länglichen geraden Interkonnektorenkörper (32) aufzunehmen.

3.  Brennstoffzelle (10) nach Anspruch 2, wobei jeder Hohlraum (14, 16) wenigstens einen Gaskanal (18) enthält, der derart länglich und gerade ausgebildet ist, dass der Interkonnektorenkörper (32) darin aufnehmbar ist.

4.  Brennstoffzelle (10) nach Anspruch 3, wobei ein Membranstrukturbereich (20) jeweils zwei benachbarte Gaskanäle (18) miteinander ionenleitend verbindet und voneinander gasdicht trennt.

5.  Brennstoffzelle (10) nach einem der vorhergehenden Ansprüche, wobei ein in dem ersten Hohlraum (14) enthaltener gerader erster Gaskanal und ein in dem zweiten Hohlraum (16) enthaltener gerader zweiter Gaskanal zueinander windschief angeordnet sind.

6.  Brennstoffzelle (10) nach einem der vorhergehenden Ansprüche, wobei die Membranstruktur (12) einen Festelektrolyten (15) enthält.

7.  Brennstoffzelle (10) nach einem der vorhergehenden Ansprüche, wobei auf der Membranstruktur (12) eine elektrisch leitende Anodenschicht (24) und eine elektrisch leitende Kathodenschicht (26) aufgebracht sind, wobei die Anodenschicht (24) in dem einen der Hohlräume (14, 16) und die Kathodenschicht (26) in dem anderen der Hohlräume (16, 14) angeordnet ist.

8.  Brennstoffzelle (10) nach einem der vorhergehenden Ansprüche, ferner umfassend eine Mehrzahl von länglichen Interkonnektorenelementen (28), die ausgebildet sind, in jeden der Hohlräume (14, 16) eingefügt zu werden und die Membranstruktur (12) und/oder die Anoden-/Kathodenschicht (24, 26) zu kontaktieren.

9.  Brennstoffzelle (10) nach Anspruch 8, wobei wenigstens eines der Interkonnektorenelemente (28) ausgebildet ist, mit der Membranstruktur (12) und/oder der Anoden-/Kathodenschicht (24, 26) einen Linienkontakt (30), vorzugsweise einen helikalen Linienkontakt, zu bilden, wenn das Interkonnektorenelement (28) in einem der Hohlräume (14,16) eingefügt ist, und/oder wobei das Interkonnektorenelement (28) ausgebildet ist, mit der Membranstruktur (12) und/oder der Anoden-/Kathodenschicht (24, 26) einen Gasdurchlassbereich (36) zu definieren, der einen Gasstrom entlang der Längsrichtung und/oder in Umfangsrichtung und/oder einen helikalen Gasstrom entlang des Interkonnektorenelements (28) erlaubt, wenn das Interkonnektorenelement (28) in einem der Hohlräume (14, 16) eingefügt ist.

10. Brennstoffzelle (10) nach einem der vorhergehenden Ansprüche, ferner umfassend wenigstens einen Gasverteiler (38), der an einer Einlassseite und/oder einer Auslassseite der Membranstruktur (12) angeordnet ist, wobei der Gasverteiler (38), der vorzugsweise an der Einlassseite angeordnet ist, derart ausgebildet ist, dass einer der Hohlräume (14, 16) mit gasförmigem Brennstoff (40) und der andere der Hohlräume (16, 14) mit gasförmigem Oxidationsmittel (42) beaufschlagbar ist und/oder wobei der Gasverteiler (38), der vorzugsweise an der Auslassseite angeordnet ist, derart ausgebildet ist, dass die Reaktionsprodukte und/oder Restgas aus dem jeweiligen Hohlraum (14, 16) auslassbar ist.

11. Brennstoffzelle (10) nach einem der vorhergehenden Ansprüche, wobei die Membranstruktur (12) in Form einer dreifach periodisch glatten Oberfläche ausgebildet ist.

12. Brennstoffzelle (10) nach Anspruch 11, wobei die Oberflächenform ausgewählt ist aus einer Gruppe von Oberflächenformen, die aus einer Gyroidform, einer gyroidartigen Form, einer Diamantform, einer diamantartigen Form, einer iWP-Form, einer iWP-artigen Form, einer Schwarz-P-Form, einer schwarz-P-artigen Form und auch denjenigen Oberflächenformen besteht, die von den vorgenannten Formen weniger als 10 % abweichen, besteht.

13. Brennstoffzellensystem für ein Luftfahrzeug, umfassend eine Mehrzahl von Brennstoffzellen (10) nach einem der vorhergehenden Ansprüche, wobei die Brennstoffzellen (10) miteinander seriell und/oder parallel elektrisch verschaltet sind.

14. Luftfahrzeug umfassend eine Brennstoffzelle (10) nach einem der Ansprüche 1 bis 12 und/oder ein Brennstoffzellensystem nach Anspruch 13.

15. Verwendung einer dreifach periodischen glatten Oberflächenform als Membranstruktur (12) einer Brennstoffzelle (10), wobei die Membranstruktur (12) ein mit Brennstoff (40) beaufschlagbares Volumen und ein mit Oxidationsmittel (42) beaufschlagbares Volumen miteinander ionenleitend verbindet und voneinander gasdicht trennt.

## FIG 1

FIG 2

FIG 3

FIG 4

EP 3 972 020 A1

FIG 5

FIG 6

FIG 7

Gyroid          Diamond          Primitive          iWP

Europäisches Patentamt
European Patent Office
Office européen des brevets

## EUROPÄISCHER RECHERCHENBERICHT

**Nummer der Anmeldung**

EP 21 18 2360

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2018/351191 A1 (KANG KI JU [KR] ET AL) 6. Dezember 2018 (2018-12-06) * Abbildungen 3,5 * * Absätze [0005], [0023], [0024], [0055] – [0065], [0081] – [0084] * ----- | 1-15 | INV. H01M8/1006 H01M8/12 H01M8/122 H01M8/124 H01M8/1246 |
| Y | EP 2 654 115 A1 (DEUTSCH ZENTR LUFT & RAUMFAHRT [DE]) 23. Oktober 2013 (2013-10-23) | 1-7 | |
| A | * Abbildung 3 * * Ansprüche 1-15 * ----- | 8-15 | |
| Y | WO 2019/074538 A1 (L LIVERMORE NAT SECURITY LLC [US]) 18. April 2019 (2019-04-18) | 1-7 | |
| A | * Abbildungen 1A,1C * * Ansprüche 1-24 * ----- | 8-15 | |

**RECHERCHIERTE SACHGEBIETE (IPC)**

H01M

Der vorliegende Recherchenbericht wurde für alle Patentansprüche erstellt

| Recherchenort | Abschlußdatum der Recherche | Prüfer |
|---|---|---|
| München | 13. Dezember 2021 | Haering, Christian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 21 18 2360

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-12-2021

| Im Recherchenbericht angeführtes Patentdokument | Datum der Veröffentlichung | Mitglied(er) der Patentfamilie | Datum der Veröffentlichung |
|---|---|---|---|
| US 2018351191 A1 | 06-12-2018 | JP 6532030 B2 | 19-06-2019 |
| | | JP 2018206751 A | 27-12-2018 |
| | | KR 20180131920 A | 11-12-2018 |
| | | US 2018351191 A1 | 06-12-2018 |
| | | WO 2018221788 A1 | 06-12-2018 |
| EP 2654115 A1 | 23-10-2013 | DE 102012103383 A1 | 24-10-2013 |
| | | EP 2654115 A1 | 23-10-2013 |
| WO 2019074538 A1 | 18-04-2019 | US 2020259233 A1 | 13-08-2020 |
| | | WO 2019074538 A1 | 18-04-2019 |

EPO FORM P0461

Für nähere Einzelheiten zu diesem Anhang : siehe Amtsblatt des Europäischen Patentamts, Nr.12/82